# EUROPÄISCHE PATENTANMELDUNG

(11) **EP 4 675 142 A1**
(43) Veröffentlichungstag der Anmeldung: **07.01.2026**
(21) Anmeldenummer: 24186646.6
(22) Anmeldetag: 04.07.2024
(51) Int. Cl.: F16L 5/10, F16L 11/15, F16L 57/00, F24F 13/02

(54) **SCHUTZROHRANORDNUNG ZUM DURCHFÜHREN EINER LEITUNG DURCH EINE ÖFFNUNG IN EINEM WANDABSCHNITT UND VERFAHREN ZUM INSTALLIEREN EINER SOLCHEN SCHUTZROHRANORDNUNG**

(71) Anmelder: DOYMA GmbH & Co, 28876 Oyten (DE)
(72) Erfinder: Straube, Florian, 28359 Bremen (DE)
(74) Vertreter: Eisenführ Speiser

(57) **Zusammenfassung**

Die Erfindung betrifft eine Schutzrohranordnung (10, 10', 10") zum Durchführen von zumindest einer erdverlegten, medienführenden Leitung (116) durch eine Öffnung (106) in einem Wandabschnitt (104) eines Gebäudes (102), mit zumindest zwei steifen in einem Winkel zueinander anordenbaren Rohrabschnitten (12, 14, 14', 14"), und mindestens einem die Rohrabschnitte (12, 14, 14', 14") miteinander verbindenden Verbindungabschnitt (16), wobei der Verbindungsabschnitt (16) als flexible Manschette (18, 18', 18") mit mindestens einem in Faltbalgabschnitt () und an beiden Endabschnitten (24, 24') der Manschette (18, 18', 18") angeordneten Rohranschlüssen (26, 26') ausgebildet und dazu eingerichtet ist, im Verbindungsabschnitt (16) zwischen den steifen Rohrabschnitten (12, 14, 14', 14") einen Biegeradius (R) von < 50 cm, besonders bevorzugt ≤ 30 cm auszubilden.

## Beschreibung

Die Erfindung bezieht sich auf eine Schutzrohranordnung zum Durchführen von zumindest einer erdverlegten, medienführenden Leitung durch eine Öffnung in einem Wandabschnitt eines Gebäudes. Des Weiteren bezieht sich die Erfindung auch auf ein Wärmeübertrager-System sowie ein Verfahren zum Installieren einer Schutzrohranordnung zum Durchführen zumindest einer erdverlegten, durch eine Öffnung in einem Wandabschnitt eines Gebäudes hindurchführbaren medienführenden Leitung.

Im Stand der Technik ist das Verlegen von medienführenden Leitungen im Erdreich beispielsweise für Wärmeübertrager-Systeme hinreichend bekannt, um beispielsweise eine medienleitende Verbindung zwischen einem außerhalb eines Gebäudes aufzustellenden Außengerät und einem innerhalb des Gebäudes anzuordnenden Innengerät zu ermöglichen.

Unter einem Wandabschnitt werden hier sowohl vertikal verlaufende Wände, d. h. Seitenwände, und horizontal verlaufende Wände, d. h. Böden oder Decken verstanden. Die Böden, durch welche hindurch die Medienleitung hindurchgeführt werden soll, sind üblicherweise Bodenplatten, die auf oder im Erdreich stehen.

Das Durchführen der Medienleitung durch einen waagerechten Wandabschnitt selbst, insbesondere im Fall der Bodenplatte eines Gebäudes, erfolgte bislang beispielsweise mithilfe eines vergleichsweise steifen bzw. starren Rohrabschnitts, der ggf. unter Verwendung eines Mauerkragens in die Bodenplatte einbetoniert wird. Mit dem außen, also beispielsweise an einer Unterseite der Bodenplatte, herausragenden Ende des steifen Rohrabschnitts wurde bislang üblicherweise ein Mantelrohr, beispielsweise ein Wellrohr, fest verbunden, welches die medienführende Leitung umgibt. Das Wellrohr wurde verwendet, um die nötige Umlenkung vom Durchführungsbereich in eine Verlegungsausrichtung, insbesondere eine waagerechte Ausrichtung, zu gewährleisten. Sofern die Verlegung zu einem wieder oberhalb des Erdreichs liegenden Punkt hin verlaufen soll, ist durch ein weiteres Mantelrohr oder einen weiteren Umlenkungsabschnitt desselben Mantelrohrs ein zusätzlicher Umlenkungsboden bereitzustellen.

Für das Durchführen einer erdverlegten Medienleitung durch eine Öffnung in einem vertikalen Wandabschnitt, insbesondere einer Kellerwand des Gebäudes, wird ähnlich wie bei der Bodenplatte ein die medienführende Leitung umgebender steifer Rohrabschnitt in die Öffnung im Wandabschnitt eingesetzt und mittels eines Dichteinsatzes gegenüber der Öffnung abgedichtet. Das an der Außenseite des Wandabschnitts herausragende Ende wird wiederum fest mit einem Mantelrohr, beispielsweise einem Wellrohr, verbunden und das Mantelrohr dann im Erdreich von einer etwa waagerechten Ausrichtung mit einem vorgegebenen Biegeradius senkrecht nach oben in Richtung des auf der Außenseite des Gebäudes angeordneten Außengeräts umgelenkt.

Die vorstehend beschriebenen Verlegungsarten funktionieren grundsätzlich. Durch die Steifheit kommerziell erhältlicher Mantelrohre sind deren Biegeradien in Richtung kleiner werdender Radien limitiert, und es sind bestimmte Mindestabstände in horizontaler Richtung mit diesen Radien verbunden, die sich bei der Installation nicht unterschreiten lassen, und die beispielsweise im Bereich von 0,5 m oder mehr liegen. Es ist allerdings gerade bei der Installation von Wärmeübertrager-Systemen, wie etwa Wärmepumpen-Systemen, in dicht besiedelten Gebieten immer häufiger nötig oder zumindest angestrebt, die Verlegungspunkte außerhalb der Gebäude für die sogenannten Außengeräte möglichst nah an die Gebäudewände heran zu positionieren.

Der Erfindung lag daher die Aufgabe zugrunde, eine Schutzrohranordnung der eingangs bezeichneten Art und/oder ein Verfahren zum Installieren einer solchen Schutzrohranordnung anzugeben, welche die oben beschriebenen Nachteile möglichst weitgehend überwindet. Ferner lag der Erfindung die Aufgabe zugrunde, die bestehenden Schutzrohranordnungen derart zu verbessern, dass der Abstand zwischen dem Wandabschnitt der Durchführung und einem davor aufzustellenden (Außen-)Gerät so gering wie möglich gehalten werden kann. Alternativ lag der Erfindung die Aufgabe zugrunde, die Installation der Schutzrohranordnung im Bereich einer Öffnung im Wandabschnitt insgesamt zu vereinfachen.

Die Erfindung löst die ihr zugrundeliegende Aufgabe bei einer eingangs bezeichneten Schutzrohranordnung mit den Merkmalen nach Anspruch 1. Insbesondere weist die Schutzrohranordnung dazu zwei steife, in einem Winkel zueinander anordenbare Rohrabschnitte und einen die Rohrabschnitte miteinander verbindenden Verbindungsabschnitt auf, wobei der Verbindungsabschnitt als flexible Manschette mit mindestens einem Faltenbalgabschnitt und an beiden Endabschnitten der Manschette angeordneten Rohranschlüssen ausgebildet und dazu eingerichtet ist, im Verbindungsabschnitt zwischen den steifen Rohrabschnitten einen Biegeradius von < 50 cm, besonders bevorzugt ≤ 30 cm auszubilden.

Die Erfindung verfolgt vorliegend den Ansatz, nunmehr zwei biegesteife Rohrabschnitte vorzusehen, deren einander zugewandte bzw. zu verbindende Enden mittels der flexiblen Manschette, welche wenigstens einen Faltenbalgabschnitt mit einer in Falten gelegte Wandung und an beiden Endabschnitten der Manschette angeordnete Rohranschlüsse aufweist, verbunden sind. Mittels der flexiblen Manschette lassen sich im Verbindungsbereich zwischen den steifen Rohrabschnitten nunmehr beliebige Winkel und Biegeradien von < 50 cm, besonders bevorzugt ≤ 30 cm erzeugen, wodurch auch die Mindestabstände eines vor einer Außenwandung eines Gebäudes aufzustellenden Außengeräts eines Wärmeübertragersystems deutlich reduziert werden können, beispielsweise auf einen Abstand von 25 bis 40 cm vor dem Außen-Wandabschnitt. Zudem lassen sich jene Biegeradien im Verbindungsbereich zweier beispielsweise senkrecht zueinander ausgerichteter Rohrabschnitte mittels der erfindungsgemäßen Schutzrohranordnung ohne großen Kraftaufwand erzeugen, so dass die Montage von einer einzigen Person durchgeführt werden kann. Durch die Verformbarkeit der in Falten gelegten Wandung können nunmehr Biegeradien erzielt werden, die um mindestens ein Drittel geringer sind als die Biegeradien, die sonst üblicherweise an einem zum Verlegen der Medienleitungen verwendeten, vergleichsweise unflexiblen Mantelrohr, insbesondere Wellrohr, im Bereich seiner Umlenkung möglich wäre.

In einer bevorzugten Ausführung ist vorgesehen, dass der Rohrabschnitt einen Durchmesser D aufweist und der Durchmesser des Rohrabschnitts weist zum Biegeradius R im Verbindungsabschnitt ein Verhältnis D/R von > 0,5, bevorzugt ≥ 0,6 auf. Auch Rohrabschnitte mit vergleichsweise großen Rohrdurchmessern von mehr20 cm lassen sich mittels der erfindungsgemäßen Manschette vereinfacht mit einem Biegeradius kleiner 30cm im Wandaußenbereich eines Gebäudes zueinander anordnen.

Gemäß einer bevorzugten Weiterbildung der Schutzrohranordnung weist die Manschette zumindest zwei in axialer Richtung im Abstand zueinander angeordnete, nach außen vorstehende Ösen oder Haken auf, wobei ein den Ösen oder Haken zugeordnetes Verbindungselement zum Arretieren des Biegeradius im Verbindungsabschnitt vorgesehen ist. Mithilfe der/des vorzugsweise außenseitig an der flexiblen Manschette vorstehenden Ösen oder Hakens kann unter Verwendung von konventionellen Verbindungselementen, etwa Zugstreben, Ketten, Bändern oder dergleichen, auf einfache Weise der erzeugte Biegeradius arretiert werden. Das Verbindungselement kann zum Beispiel als Kettenteil oder Kabelbinder ausgebildet sein. Vorzugsweise sind die Ösen oder Haken mit der Wandung einstückig ausgebildet, insbesondere an diese angeformt. Vorzugsweise sind die Ösen oder Haken an den voneinander abgewandten Endabschnitten der Manschette angeordnet.

Vorzugsweise weist die Manschette, insbesondere an ihrem Faltenbalgabschnitt und/oder ihren Endabschnitten, außenseitig mehrere in axialer Richtung und in Umfangsrichtung verteilt angeordnete Ösen oder Haken auf. Dadurch ist erreicht, dass die Manschette nicht zwingend nur in einem bestimmten Umfangsabschnitt zum Erzeugen der Umlenkung gestaucht werden kann. Die erfindungsgemäß ausgebildete Manschette erhält somit eine verbesserte Einstellbarkeit, die es einem Anwender ermöglicht, axial zueinander beabstandete Abschnitte in entgegengesetzte Richtungen zu biegen und zu arretieren. Mithilfe der mehreren über den Umfang und in axialer Richtung bevorzugt gleichmäßig verteilt angeordneten Ösen oder Haken an der Außenseite der Wandung kann die flexible Manschette in beispielsweise eine S-Form gebogen bzw. gebracht werden.

Eine bevorzugte Ausführungsform sieht vor, dass das Verbindungselement einen Stangenkörper aufweist, an dem jeweils endseitig ein Kopplungsabschnitt für eine Formschlussverbindung mit einer der an der Manschette ausgebildeten Ösen oder Haken angeordnet ist. Mit der Ausgestaltung als Stangenkörper mit den jeweils endseitig angeordneten Kopplungsabschnitten, wobei die Kopplungsabschnitte vorzugsweise dornartig senkrecht am Stangenkörper abstehen oder hakenförmig ausgebildet sind, ist eine strukturell einfache Möglichkeit zur Ausgestaltung eines den Biegeradius arretierenden Verbindungselements erzielt. Jede Öse oder Haken weist bevorzugt einen Durchbruch zum Zusammenwirken mit dem Kopplungsabschnitt am Verbindungselement auf. Der Durchbruch hat eine Längsachse, die senkrecht zur Mittenachse des jeweils zugeordneten Abschnitts der Manschette, an der die Öse ausgebildet ist, verläuft.

In einer bevorzugten Ausführung der Schutzrohranordnung weist der Faltenbalgabschnitt auf seiner Wandung außenseitig, vorzugsweise zwischen zwei benachbart angeordneten Falten, mehrere in axialer Richtung X und/oder in Umfangsrichtung U angeordnete Versteifungselemente auf. Mittels der Versteifungselemente an der Wandung der Manschette ist insbesondere die Biegesteifigkeit in vorbestimmten Bereichen der Manschette erhöht. Insbesondere im Stauchbereich der Manschette ist einem Abknicken der Wandung und damit einem Zusammenfallen des freien Querschnitts zum Durchführen der Leitung entgegengewirkt. Eine mit den erfindungsgemäßen Versteifungselementen ausgerüstete Manschette weist somit entlang der mit den Falten ausgerüsteten Wandung einen bevorzugt gleichmäßigen Biegeradius auf.

Ein außenseitig an der Manschette ausgebildetes Versteifungselement ist insbesondere ein an der Außenseite der Wandung sich zwischen zwei benachbarten Falten erstreckender Materialsteg, der einen bogenförmigen Verlauf oder zwei winklig zueinander verlaufende Stegabschnitte aufweist. Dadurch wirkt das Versteifungselement einem Stauchvorgang sicher entgegen, behindert diesen jedoch nicht übermäßig.

Vorzugsweise definieren mehrere in axialer Richtung hintereinander angeordnete Versteifungselemente eine Reihe von Versteifungselementen, wobei vorzugsweise mindestens zwei Reihen von Versteifungselementen außenseitig an der Wandung des Faltenbalgabschnitts angeordnet sind. Damit kann eine erfindungsgemäß ausgebildete Manschette mit ihrem Faltenbalgabschnitt nahezu unabhängig von ihrer Ausrichtung entlang ihres Umfangs beliebig entlang einer Seite gestaucht und an der gegenüberliegenden Seite gedehnt werden, ohne dass dies Einfluss auf das Biegeverhalten der flexiblen Manschette hätte. Vorzugsweise sind mindestens zwei, besonders bevorzugt vier Reihen solcher Versteifungselemente gleichmäßig über den Umfang an der Wandung verteilt angeordnet. Zwei benachbart zueinander angeordnete Reihen von Versteifungselementen sind in einem Winkel von 90° oder 180° über den Umfang versetzt zueinander angeordnet. Vorzugsweise sind die Versteifungselemente zwischen zwei nach außen vorstehenden Flanken zweier benachbarter Falten und zudem nur in jeder zweiten Vertiefung an der Wandung ausgebildet. Bevorzugt sind zwei in Umfangsrichtung versetzt zueinander angeordnete Reihen von Versteifungselementen mit einem axialen Versatz um jeweils eine benachbarte Vertiefung an der Wandung angeordnet.

Eine mögliche Weiterbildung der Schutzrohranordnung sieht vor, dass die flexible Manschette aus einem 2-K-Material ausgebildet ist, wobei vorzugsweise die Endabschnitte und/oder ein mittlerer Abschnitt der Manschette aus einem hartelastischen Kunststoff ausgebildet sind/ist, wobei die Endabschnitte vorzugsweise jeweils ein innenliegendes Dichtelement aufweisen. Die Verwendung eines 2-K-Materials stellt eine, wenn auch aufwendigere Möglichkeit dar, um bestimmte Abschnitte der Manschette gezielt flexibel oder steif auszugestalten. Vorzugsweise sind die für das Erzeugen des Biegeradius benötigten Faltenbalgabschnitte flexibel bzw. verformbar, wohingegen andere Abschnitte der Manschette aus einem vergleichsweise steifen bzw. hartelastischen Material ausgebildet sind, welche die benötigte Festigkeit für beispielsweise eine strukturell feste Verbindung mit Abschnitten eines beispielsweise damit zu koppelnden steifen Rohrabschnitts besitzen. Vorzugsweise sind in einer Ausgestaltung die Endabschnitte der ansonsten vollständig aus einem flexiblen Material ausgebildeten Manschette aus einem hartelastischen Material, vorzugsweise Kunststoff ausgebildet. In einer möglichen Ausführung kann alternativ oder optional ein mittlerer Abschnitt oder mehrere mittlere Abschnitte der Manschette aus einem hartelastischen Material ausgebildet sein, mittels dessen insbesondere die Ringsteifigkeit an der Manschette erhöht ist, um gleichmäßige Biegeradien an den flexiblen Abschnitten an der in Falten gelegten Wandung zu erzielen.

Vorzugsweise sind die Endabschnitte der Manschette als Steckmuffe ausgeführt, an denen jeweils vorzugsweise innenseitig Rastelemente vorstehen, welche dazu eingerichtet sind, mit einer Außenseite des in die Steckmuffe einführbaren steifen Rohrabschnitts formschlüssig in Eingriff gebracht zu werden. Ein aus einem hartelastischen Kunststoff ausgebildeter Endabschnitt kann bevorzugt als Steckmuffe ausgebildet sein, die mit einem insbesondere ebenfalls steifen Rohrabschnitt vorzugsweise eine fluiddichte Verbindung ausbildet. Mit der Ausgestaltung von innenseitig vorstehenden Rastelementen an der Steckmuffe der Manschette ist zudem eine feste Verbindung mit einem damit zu koppelnden steifen Rohrabschnitt erreicht. Um eine zumindest flüssigkeitsdichte, bevorzugt fluiddichte Verbindung zwischen der Steckmuffe und einem damit zusammenwirkenden Ende eines steifen Rohrabschnitts gewährleisten zu können, ist an der Innenseite eines als Steckmuffe ausgebildeten Endabschnitts zumindest ein Dichtungselement vorgesehen. Mittels der innenseitig vorstehenden Rastelemente ist beim Verbinden der Endabschnitte der erfindungsgemäßen Manschette mit einem steifen Rohrabschnitt ein selbsttätiges Arretieren der Verbindungsbereiche zueinander umgesetzt. Die Rastelemente wirken in einer bevorzugten Ausführungsform mit Vertiefungen an der Außenseite des steifen Rohrabschnitt zusammen.

Gemäß einer bevorzugten Ausführungsform wirkt die Manschette zumindest entlang eines Abschnitts in axialer Richtung mit einem separaten, zumindest außenseitig um den der Faltenbalgabschnitt erstreckendes Stützsteil zur Erhöhung der Biegesteifigkeit des Verbindungsbereichs der erfindungsgemäßen Schutzrohranordnung zusammen, wobei vorzugsweise das Stützteil als spiralförmige Wendel ausgebildet ist. Bei einer vollständig flexibel ausgebildeten Manschette kann diese durch ein sich zumindest entlang eines Abschnitts an der Außenseite der Wandung erstreckendes Stützteil ausgesteift werden. Mittels des den Faltenbalgabschnitt außenseitig umgebenden Stützteils, das vorzugsweise auch selbst eine ausreichend hohe Flexibilität zur Verwirklichung eines Biegeradius von ≤ 30 cm erfüllt, ist ebenfalls einem übermäßigen Stauchen von Wandungsabschnitten der Manschette entgegengewirkt. Somit weist eine mit einem derartigen Stützteil ausgerüstete Manschette bei ihrer Verwendung in axialer Richtung einen bevorzugt gleichmäßigen Biegeradius entlang der Rohrwandung auf. In einer möglichen Ausgestaltung ist das Stützteil als spiralförmige Wendel ausgebildet. Vorzugsweise kann die spiralförmige Wendel mit entsprechend an der Außenseite der Wandung des Faltenbalgabschnitts oder der Endabschnitte radial abstehenden Ösen oder Haken in Eingriff stehen. In einer alternativen Ausgestaltung ist das Stützteil aus mehreren jeweils über Gelenke untereinander verbundenen Hülsteilen ausgebildet, welche die Manschette außenseitig aufnehmen.

Gemäß einer bevorzugten Weiterbildung der Schutzrohranordnung ist zumindest der Faltenbalgabschnitt der Manschette aus einem elastischen Material ausgebildet, das einen Härtegrad gemessen nach DIN ISO 7619-1 aufweist, der unterhalb 80 Shore A liegt, vorzugsweise in einem Bereich von etwa 40-80 Shore A. Damit weist das zur Ausbildung von zumindest einem Faltenbalgabschnitt der Manschette verwendete Material eine Festigkeit auf, die im Vergleich zur Festigkeit eines Wellrohrs deutlich verringert ist und sich somit einfach verformen lässt. Damit ist die Montage der Schutzrohranordnung mit einer derartig erfindungsgemäß ausgebildeten Manschette weiter vereinfacht. Das zur Ausgestaltung der Manschette, insbesondere des Faltenbalgabschnitts verwendete Material ist beispielsweise ein Elastomer, wie beispielsweise NBR oder EPDM. In einer bevorzugten Ausführung ist die gesamte Manschette aus einem Material mit der vordefinierten Shore-Härte ausgebildet, wodurch mittels der Endabschnitte der Manschette gegenüber den steifen Rohrabschnitten eine zumindest flüssigkeitsdichte, bevorzugt fluiddichte Abdichtung umgesetzt werden kann. Vorzugsweise weisen die Endabschnitte auf ihrer der Außenseite eines damit in Kontakt bringbaren Endes eines steifen Rohrabschnitts zugewandten Innenseite radial nach innen vorstehende, umlaufende Dichtstege auf.

Gemäß einer bevorzugten Ausgestaltung weist die Manschette, vorzugsweise dessen Faltenbalgabschnitt, mindestens eine Falte mit einer zu den übrigen Falten unterschiedlichen Wandstärke und/oder Geometrie auf. Mit der unterschiedlichen Ausgestaltung von Falten entlang eines Abschnitts des Faltenbalgabschnitts wird dem Bereich, der der größten Verformungsbelastung beim Biegen der Manschette unterliegt, eine erhöhte Ringsteifigkeit verliehen. Durch den verbesserten Knickschutz weist der Faltenbalgabschnitt entlang seiner Erstreckung einen im Wesentlichen gleichförmigen freien Innenquerschnittbl zur Aufnahme der innerhalb der Schutzrohranordnung aufzunehmenden medienführenden Leitung auf. Vorzugsweise weisen die auf der halben Länge eines faltbaren Abschnitts angeordneten Falten eine erhöhte Materialstärke und/oder die Falten eine in radialer Richtung vergrößerte Höhe auf.

Vorzugsweise weisen die in ihrer Wandstärke vergrößerten Falten eine etwa 1,5- bis etwa 3-fach vergrößerte Wandstärke auf. Die Falten, welche in ihrer Faltenhöhe vergrößert ausgebildet sind, weisen eine etwa 1,5 bis 2,5-fach vergrößerte Faltenhöhe auf.

Eine Weiterbildung der Erfindung sieht vor, dass die Manschette mittels eines ihrer Rohranschlüsse einteilig mit einem der steifen Rohrabschnitte ausgebildet ist. Mit der einteiligen Ausgestaltung eines steifen Rohrabschnitts und der den Verbindungsbereich ausbildenden Manschette ist eine dauerhaft sichere Abdichtung in dem nunmehr durch Stoffschluss zwischen den Komponenten der Schutzrohranordnung hergestellten Verbindungsbereich erreicht. Vorzugsweise ist die verformbare Manschette mit ihrem Faltenbalgabschnitt und der damit einteilig ausgebildete, steife Rohrabschnitt, welcher vorzugsweise zum Einsetzen in eine Öffnung in einem Wandabschnitt eines Gebäudes eingerichtet ist, aus demselben Material, wie beispielsweise einem weichelastischen Material, hergestellt. Um die steife Ausgestaltung des an die Manschette angeformten Rohrabschnitts zu erzielen, weist dieser im Vergleich zur Manschette eine im Wesentlichen zylindrische Wandung mit einer deutlich vergrößerten Wandstärke auf. In einer alternativen Ausführung sind die Manschette und der damit einteilig ausgebildete steife Rohrabschnitt aus einem 2-K-Material hergestellt. In einer Ausführung der Erfindung sind entlang eines Abschnitts auf der Außenseite des in die Öffnung im Wandabschnitt eingesetzten steifen Rohrabschnitt mehrere radial nach außen vorstehende Dichtstege zum Abdichten gegenüber der Öffnung im Wandabschnitt vorgesehen.

Gemäß einer Weiterbildung der Schutzrohranordnung weist ein steifer Rohrabschnitt wenigstens eine Wandhülse mit einem innenseitig angeformten Dichtelement zur abdichtenden Aufnahme eines zur Wandhülse teleskopierbaren Rohrteils auf. Damit ist wenigstens einer der Rohrabschnitte längenveränderlich ausgeführt, wodurch das Koppeln des Verbindungsabschnitts mit seinem einen Rohranschluss an insbesondere den sich durch den Wandabschnitt erstreckenden Rohrabschnitt vereinfacht ist. Vorzugsweise ist die Wandhülse abdichtend gegenüber der Öffnung im Wandabschnitt aufgenommen. Die Wandhülse weist vorzugsweise einen Anschlagflansch auf, der mit der Innenseite des Wandabschnitts in Anlage steht. Das Rohrteil, welches bevorzugt als Abschnitt eines KG-Rohres ausgeführt sein kann, ist gegenüber der Innenseite der Wandhülse mittels eines daran angeformten oder angeordneten Dichtelements fluiddicht abgedichtet.

Die Erfindung betrifft in einem zweiten Aspekt ein Wärmeübertrager-System mit einem auf einer Innenseite eines Wandabschnitts eines Gebäudes anordenbaren Innengerät, einem auf der Außenseite des Wandabschnitts anordenbaren und durch eine Öffnung in einem Wandabschnitt mittels mindestens einer medienführenden Leitung mit dem Innengerät verbindbaren Außengerät und mindestens einer medienführenden Leitung.

Die Erfindung betreffend das Wärmeübertrager-System löst auch die der erfindungsgemäßen Schutzrohranordnung zugrunde gelegte Aufgabe, indem das Wärmeübertrager-System eine in der Öffnung des Wandabschnitts montierbare, erdverlegte Schutzrohranordnung nach einer der vorstehend beschriebenen bevorzugten Ausführungsformen aufweist. Ein mit einer solchen Schutzrohranordnung ausgerüstetes erfindungsgemäßes Wärmeübertrager-System kann vereinfacht an Gebäuden mit Wandabschnitten installiert werden, die insbesondere erdverlegte und durch eine Öffnung im Wandabschnitt hindurchführbare Medienleitungen aufweisen. Zudem kann ein Außengerät des erfindungsgemäßen Wärmeübertrager-Systems mit deutlich verringertem Abstand zur Außenwand des Gebäudes aufgestellt werden. Insbesondere können mittels der Schutzrohranordnung, an denen im Gegensatz zu den bekannten Schutzrohranordnungen deutlich verringerte Biegeradien möglich sind, nunmehr Außengeräte mit einem Abstand von beispielsweise 25 bis 40 cm zur Gebäudewand aufgestellt werden, ohne dass ein Abknicken im Umlenkungsbereich der Schutzrohranordnung auftritt. In einer bevorzugten Ausführung werden, um an der mindestens einen medienführenden Leitung selbst die gewünschten Biegeradien umsetzen zu können, die medienführende Leitung bzw. Leitungen als Flexschläuche ausgebildet.

Unter dem Begriff des Wärmeübertrager-Systems sind vorliegend Klimaanlagen, die im Inneren des Gebäudes eine Kühlwirkung erzeugen, und Heizanlagen, insbesondere Wärmepumpenanlagen, die im Inneren des Gebäudes eine Heizwirkung erzeugen, zu verstehen. Unter einem Außengerät ist beispielsweise eine Außeneinheit einer Split-Wärmepumpe oder auch ein Monoblock-Wärmepumpe zu verstehen. Ein Innengerät kann beispielsweise eine Inneneinheit einer Split-Wärmepumpe oder ein(e) mit einem Monoblock-Gerät einer Wärmepumpe verbundene(r) Hydraulikeinheit oder Wärmespeicher sein. Mittels der medienführenden Leitung wird bei einem Split-Gerät ein zwischen dem Außengerät und dem Innengerät zirkulierendes Kältemittel transportiert. In einer alternativen Ausführung wird mittels der medienführenden Leitung/Leitungen ein Wärmeübertrager-Medium, wie beispielsweise Wasser, transportiert.

Der zweite Aspekt betreffend das Wärmeübertrager-System macht sich dieselben Vorteile zunutze wie der erste erfindungsgemäße Aspekt, sodass bevorzugte Ausführungsformen des ersten Aspekts zugleich auch bevorzugte Ausführungsformen des zweiten Aspekts sind und umgekehrt, weswegen diesbezüglich zur Vermeidung von Wiederholungen auf die obigen Ausführungen zur erfindungsgemäßen Schutzrohr-Anordnung verwiesen wird.

Die Erfindung betrifft gemäß einem weiteren Aspekt ein Verfahren zum Installieren einer Schutzrohranordnung zum Durchführen zumindest einer erdverlegten, durch eine Öffnung in einem Wandabschnitt eines Gebäudes hindurchführbaren, medienführenden Leitung.

Das erfindungsgemäße Verfahren löst ebenfalls die eingangs beschriebene Aufgabe mit den Schritten:
- Bereitstellen oder Erzeugen einer Schutzrohranordnung, wobei die Schutzrohranordnung mindestens zwei im Abstand zueinander angeordnete, steife Rohrabschnitte und mindestens eine die Rohrabschnitte miteinander verbindende, flexible Manschette mit mindestens einem Faltenbalgabschnitt und an beiden Endabschnitten der Manschette angeordneten Rohranschlüssen aufweist;
- Vorinstallieren der mindestens einen medienführenden Leitung innerhalb der Schutzrohrandordnung, wobei die steifen Rohrabschnitte der Schutzrohranordnung beim Hindurchführen der Leitung durch die Schutzrohranordnung eine im Wesentlichen gerade Ausrichtung zueinander aufweisen, und
- Montieren der Schutzrohranordnung mit der darin angeordneten medienführenden Leitung in einem Wandbereich, und Ausrichten der steifen Rohrabschnitte in einem Winkel derart zueinander, dass im Bereich der Manschette zwischen den steifen Rohrabschnitten ein Biegeradius von < 50 cm, besonders bevorzugt ≤ 30 cm erzeugt wird

Das erfindungsgemäße Verfahren macht sich die Erkenntnis zunutze, dass mit wenigen übersichtlichen und einfach durchzuführenden Handgriffen eine erdverlegte Schutzrohranordnung in einer unterirdischen Öffnung eines Wandabschnitts eines Gebäudes installiert werden kann. Durch das Vorsehen einer flexiblen, als Verbindungsbereich zwischen zwei Enden zweier steifer Rohrabschnitte zu montierenden Manschette lassen sich Biegeradien erzielen, sodass ein auf einer Außenseite eines Gebäudes aufzustellendes Außengerät in einem deutlich verringerten Abstand vor der Außenseite des Wandabschnitts montiert werden kann. Dadurch können beispielsweise deutlich verringerte Rohrlängen zum Verbinden eines Außen- und eines Innengeräts eines Wärmeübertrager-Systems verwendet werden. Mit dem Vorinstallieren der mindestens einen, bevorzugt zwei medienführenden Leitungen innerhalb der Schutzrohranordnung, wobei in einer Ausführung zusätzlich zu den medienführenden Leitungen wenigstens eine Strom- oder Signalleitung durch die Schutzrohranordnung hindurchgeführt wird, ist durch die im Wesentlichen geradlinige Ausrichtung der Schutzrohranordnung das Hindurchführen der Medien-, Strom- oder Signalleitung deutlich vereinfacht. Erfindungsgemäß erfolgt das Montieren der Schutzrohranordnung und ein damit verbundenes Erzeugen eines Biegeradius an der Manschette, nachdem sämtliche zu verlegenden Leitungen innerhalb der Schutzrohranordnung eingeführt worden sind.

Vorzugsweise wird beim Montieren der Schutzrohranordnung im Bereich der die steifen Rohrabschnitte verbindenden Manschette ein Biegeradius von < 50 cm, besonders bevorzugt ≤ 30 cm erzeugt. In einer möglichen Ausgestaltung, in der eine medienführende Leitung durch eine Bodenplatte eines Gebäudes hindurchgeführt werden soll, können die steifen Rohrabschnitte der Schutzrohranordnung mit einer im Wesentlichen parallelen Ausrichtung zueinander angeordnet werden. Der Verbindungsbereich zwischen den miteinander zu verbindenden Enden der steifen Rohrabschnitte wird bevorzugt vollständig durch die oben beschriebene Manschette ausgebildet, wobei ein Abschnitt, insbesondere ein mittlerer Abschnitt, aus einem vergleichsweise hartelastische Eigenschaften aufweisenden Material ausgebildet sein kann. Vorzugsweise weisen die Umlenkbereiche zu beiden Seiten des steifen mittleren Abschnitts einen Biegeradius von < 50 cm, besonders bevorzugt ≤ 30 cm auf.

Das Verfahren zum Installieren einer Schutzrohranordnung wird durch einen, mehrere oder sämtliche der nachfolgend angeführten Verfahrensschritte weitergebildet:
- Ausrichten der steifen Rohrabschnitte in einen Winkel im Bereich von etwa 80° bis etwa 180° zueinander;
- Abdichten eines steifen Rohrabschnitts gegenüber der Öffnung im Wandabschnitt;
- Arretieren der Position des Biegeradius an der Manschette mittels eines mit der Manschette in Wirkverbindung bringbaren Verbindungselements, und
- Aussteifen der Manschette mittels eines separaten, um die Außenseite einer Wandung der Manschette anordenbaren Stützteil.

Vorzugsweise werden beim Montieren der Schutzrohranordnung die steifen Rohrabschnitte mindestens in einem Winkel von etwa 90° zueinander angeordnet. Bei einer durch eine Bodenplatte eines Gebäudes hindurchgeführten Leitung können die steifen Rohrabschnitte der Schutzrohranordnung in einem Winkel von etwa 180° und mit einer im Wesentlichen parallelen Ausrichtung mit einem Abstand im Bereich von bevorzugt etwa 60 cm bis etwa 1 m zueinander angeordnet werden. In einem optionalen Verfahrensschritt wird mittels eines Abdichtens des zumindest einen durch die Öffnung im Wandabschnitt hindurchgeführten steifen Rohrabschnitts gegenüber der Öffnung das Eindringen von Feuchtigkeit in das Gebäude bzw. in den Wandabschnitt vermieden. Vorzugsweise wird der der Außenseite der die Öffnung aufweisenden Gebäudewand zugeordnete Abschnitt des steifen Rohrabschnitts gegenüber zumindest der Öffnung und gegebenenfalls auch gegenüber der Außenseite der Wand mittels einer Flächendichtung abgedichtet, insbesondere verklebt. Um gemäß einer möglichen Ausführung des Verfahrens die außenseitige Montage der Schutzrohranordnung zu vereinfachen, kann der Biegeradius an der Manschette mittels eines geeigneten, mit der Manschette in Wirkverbindung bringbaren Verbindungselements arretiert werden. Damit ist vermieden, dass ein mit dem vom Wandabschnitt abgewandten Ende der Manschette verbundener Rohrabschnitt versehentlich in einem zu weiten oder zu nahen Abstand zur Gebäudewand installiert wird. In einer Ausführung der Erfindung kann die Manschette, um deren Biegesteifigkeit im Umlenkbereich zu erhöhen, mittels einer separaten, um die Außenseite der Wandung der Manschette anordenbaren Stützteil ausgesteift und somit bei der Einhaltung eines gewünschten Biegeradius unterstützt werden.

In noch einem weiteren Aspekt betrifft die Erfindung die Verwendung einer flexiblen Manschette mit mindestens einem Faltenbalgabschnitt, der eine Wandung mit einer Vielzahl an Falten aufweist, und an beiden Endabschnitten der Manschette angeordneter Rohranschlüsse als Verbindungsabschnitt zwischen zwei steifen, in einem Winkel zueinander verlaufender Rohrabschnitte einer Schutzrohranordnung zum Durchführen von zumindest einer erdverlegten, medienführenden Leitung durch eine Öffnung in einem Wandabschnitt eines Gebäudes, wobei im Verbindungsabschnitt zwischen den steifen Rohrabschnitten ein Biegeradius von < 50 cm, besonders bevorzugt ≤ 30 cm ausgebildet ist.

Die erfindungsgemäße Verwendung macht sich dieselben Vorteile zunutze wie die erfindungsgemäße Schutzrohranordnung des ersten Aspekts, das Wärmeübertrager-System gemäß dem zweiten Aspekt sowie das erfindungsgemäße Verfahren gemäß dem dritten Aspekt.

Die zu den drei ersten Aspekten beschriebenen bevorzugten Ausführungsformen bzw. Weiterbildungen sind zugleich auch bevorzugte Ausführungsformen der erfindungsgemäßen Verwendung und umgekehrt, weswegen zur Vermeidung von Wiederholungen auf die obigen Ausführungen zu den vorgenannten Aspekten verwiesen wird.

Aus den vorstehend beschriebenen Aspekten ergibt sich, dass die Schutzrohranordnung in erster Linie als Durchführung durch eine Seitenwand eines Gebäudes entwickelt worden ist. Sie ist aber auch geeignet und wird in einer bevorzugten Ausführungsform auch dazu verwendet, eine Durchführung durch eine Bodenplatte und/oder eine Geschoss- oder Gebäudedecke hindurch bereitzustellen.

Die Erfindung wird im Folgenden anhand eines bevorzugten Ausführungsbeispiels unter Bezugnahme auf die nachfolgenden Figuren näher beschrieben. Hierbei zeigen:
- Fig. 1:: eine Ansicht einer ersten Ausführungsform einer erfindungsgemäßen Schutzrohranordnung zum Durchführen von zumindest einer Leitung durch eine Öffnung in einen Wandabschnitt eines Gebäudes;
- Fig. 2:: eine perspektivische Ansicht einer erfindungsgemäßen Manschette nach Fig. 1;
- Fig. 3 und 4:: perspektivische Ansichten weiterer Ausführungsformen einer erfindungsgemäßen Manschette;
- Fig. 5 und 6:: Ansichten einer weiteren Ausführungsform einer erfindungsgemäßen, flexiblen Manschette;
- Fig. 7 und 8:: Ansichten weiterer Ausführungsformen erfindungsgemäßer Manschetten;
- Fig. 9 und 10:: Schnittansichten von zwei weiteren Ausführungsformen erfindungsgemäß ausgebildeter Manschetten;
- Fig. 11 und 12:: Ansichten von zwei weiteren Ausführungsformen erfindungsgemäßer Schutzrohranordnungen, montiert in einem Wandabschnitt;
- Fig. 13:: eine perspektivische Ansicht eines erfindungsgemäßen Wärmeübertrager-Systems, und
- Fig. 14:: eine schematische Darstellung eines erfindungsgemäßen Verfahrens zum Installieren einer Schutzrohranordnung.

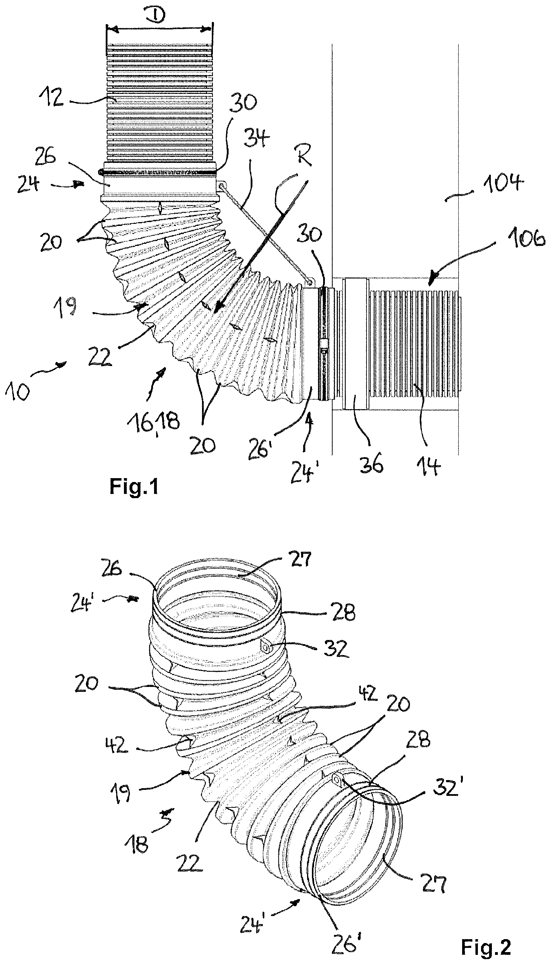

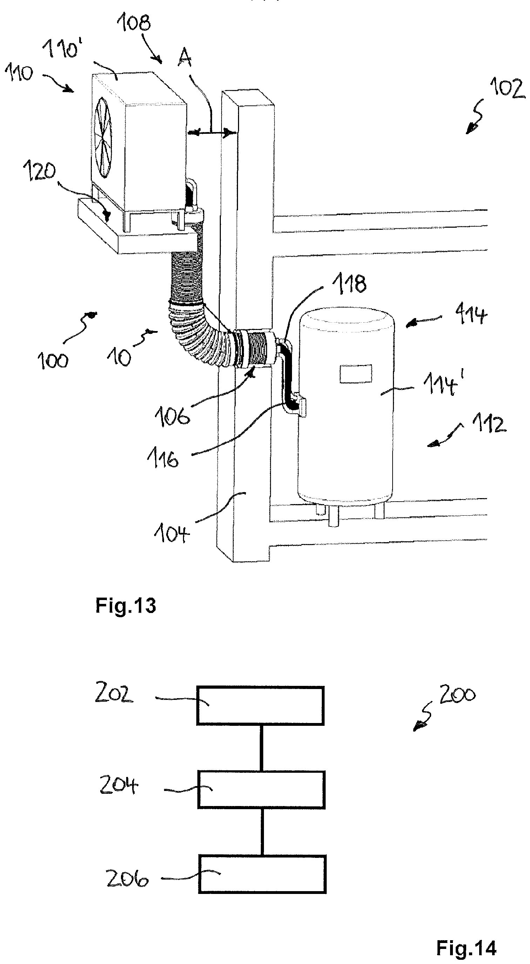

In Fig. 1 ist eine Ansicht einer möglichen Ausführung einer Schutzrohranordnung 10 zum Durchführen von zumindest einer erdverlegten, medienführenden Leitung 116 (Fig.13) durch eine Öffnung 106 in einem Wandabschnitt 104 eines Gebäudes 102 gezeigt. Die Schutzrohranordnung 10 umfasst zwei steife, in einem Winkel, vorliegend in einem Winkel von etwa 90°, zueinander anordenbare Rohrabschnitte 12, 14, und mindestens einen die Rohrabschnitte 12, 14 miteinander verbindenden Verbindungsabschnitt 16, der vorliegend als flexible Manschette 18 mit einem Faltenbalgabschnitt 19 ausgebildet ist. Der Faltenbalgabschnitt 19 weist eine in Falten 20 gelegte Wandung 22 auf.

Die Manschette 18 weist an ihren Endabschnitten 24, 24' zu beiden Seiten des Faltenbalgabschnitts 19 jeweils einen mit einem Ende der Rohrabschnitte 12, 14 zusammenwirkenden Rohranschluss 26, 26' auf. In der vorliegend gezeigten Ausführung ist die Manschette 18 dazu eingerichtet, zwischen den steifen Rohrabschnitten 12, 14 mit ihren Durchmessern D einen Biegeradius R von < 50 cm, besonders bevorzugt ≤ 30 cm auszubilden. Mit dem mittels der flexiblen Manschette 18 umsetzbaren Biegeradius R lässt sich ein Außengerät 108 beispielsweise in einem Abstand A zur Außenseite des Wandabschnitts 104 in einem Bereich von 25 bis 40 cm aufstellen, siehe Fig.13. Der steife Rohrabschnitt 14 ist gegenüber der Öffnung 106 im Wandabschnitt 104 mittels eines Dichtungseinsatzes 36 abgedichtet. In einer Ausgestaltung weist der Durchmesser D der Rohrabschnitte 12, 14 zum Biegeradius R des Verbindungsabschnitts 16 ein Verhältnis D/R von < 0,5, bevorzugt ≥ 0,6 auf.

Fig. 2 zeigt die erfindungsgemäß ausgebildete gebogen dargestellte Manschette 18 nach Fig. 1 mit ihrem Faltenbalgabschnitt 19, dessen Wandung 22 eine Vielzahl von sich abwechselnd nach innen und nach außen erstreckender Falten 20 aufweist. Die Manschette 18 weist einen im Wesentlichen zylindrischen Querschnitt auf. Die Manschette 18 ist mit ihren Rohranschlüssen 26, 26' dazu eingerichtet mit den steifen Rohrabschnitten 12, 14 gekoppelt zu werden.

Innenseitig ist an den Rohranschlüssen 26, 26' mindestens ein Dichtelement 27, insbesondere in Form eines umlaufenden Dichtsteges, für eine fluiddichte Verbindung mit den zu koppelnden Enden der Rohrabschnitte 12, 14 vorgesehen. An der Außenseite eines Rohranschlusses 26, 26' ist jeweils eine umlaufende Nut 28 für eine mit den Rohranschlüssen 26, 26' zusammenwirkende Spanneinrichtung 30 (Fig.1) ausgebildet. In der vorliegend gezeigten Ausführung ist die Spanneinrichtung 30 jeweils als Spannschelle ausgeführt.

Ferner weist die Manschette 18 mindestens zwei in axialer Richtung zueinander im Abstand angeordnete, radial vorstehende Ösen 32, 32' auf. Die Ösen 32, 32' sind insbesondere im Bereich der Endabschnitte 24, 24' an den Rohranschlüssen 26, 26' angeordnet. Mit den Ösen 32, 32' kann ein Verbindungselement 34 in haltende Wirkverbindung gebracht werden, mittels dessen an der Manschette 18 der Biegeradius R arretiert werden kann. In der einfachsten Ausgestaltung ist das Verbindungselement 34 ein nicht näher gezeigter Kabelbinder oder Kettenteil.

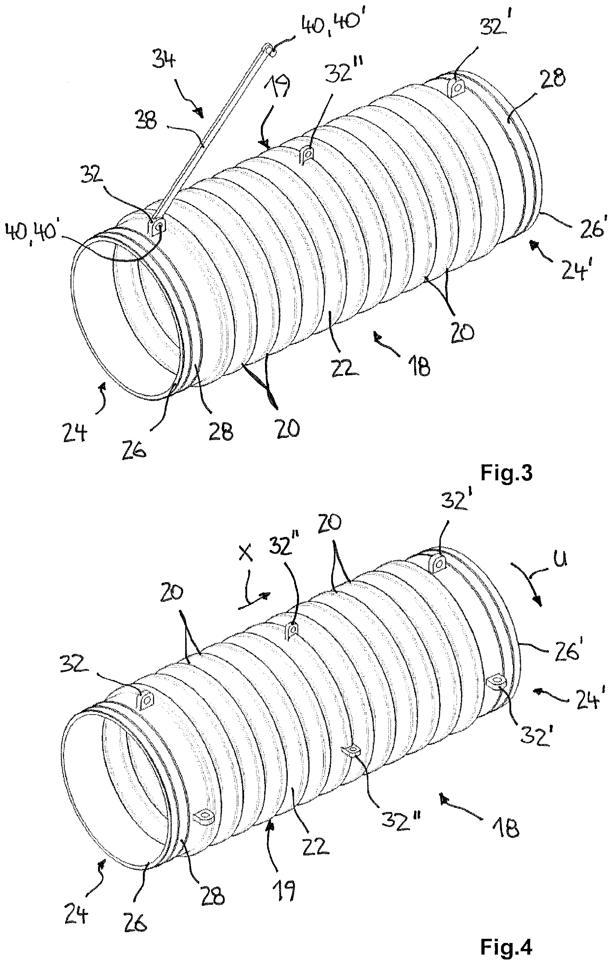

In den Fig. 3 und 4 sind weitere Ausführungsformen einer Manschette 18 in ihrer gestreckten Ausrichtung gezeigt, an denen zusätzlich zu den Ösen 32, 32' an den Rohranschlüssen 26, 26' weitere Ösen 32" außenseitig an der Manschette 18, insbesondere am Faltenbalgabschnitt 19 und den Rohranschlüssen 26, 26`, in axialer Richtung X und in Umfangsrichtung U verteilt angeordnet sind. Wie Fig. 3 ferner zeigt, weist das Verbindungselement 34 in einer Ausführung einen Stangenkörper 38 auf, an dem endseitig jeweils Kopplungsabschnitte 40 angeordnet sind, die eingerichtet sind, mit einer jeweiligen Öse 32, 32', 32" eine Formschlussverbindung einzugehen. In einer Ausführung sind die Kopplungsabschnitte 40 als radial am Stangenkörper 38 abstehende Dorne 40' ausgeführt.

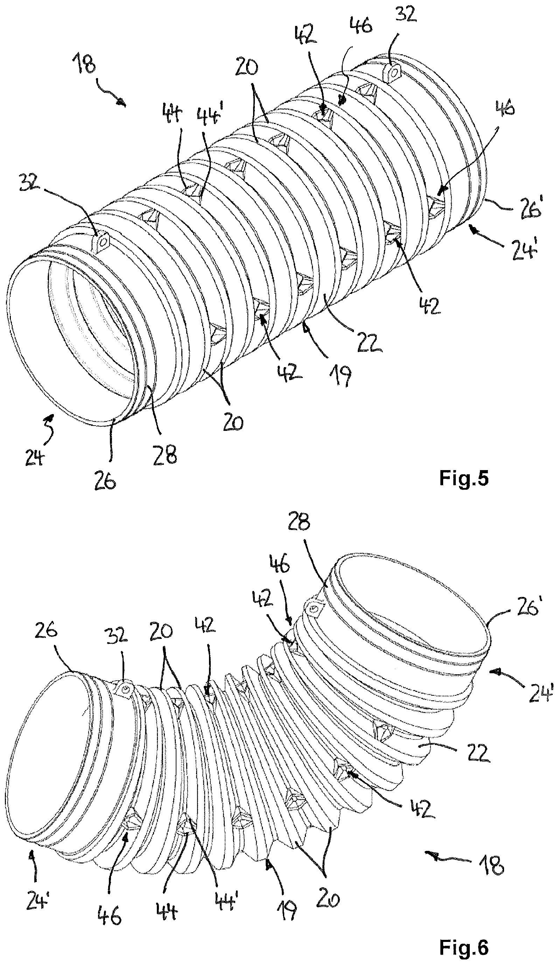

Fig. 5 und 6 zeigen eine weitere Ausführungsform einer Manschette 18 in ihrer gestreckten und ihrer gebogenen Ausrichtung. Die Manschette 18 weist außenseitig am Faltenbalgabschnitt 19 vorzugsweise zwischen zwei benachbart angeordneten Falten 20, mehrere in axialer Richtung X und/oder in Umfangsrichtung U angeordnete Versteifungselemente 42 auf. Die Versteifungselemente 42 werden mittels mehrerer im Winkel zueinander angeordneter, insbesondere rautenförmiger Materialstege 44, 44' ausgebildet. In der vorliegenden Ausführung definieren mehrere in axialer Richtung hintereinander angeordnete Versteifungselemente 42 eine Reihe 46 solcher Versteifungselemente 42, wobei vorzugsweise außenseitig an der Wandung 22 der Manschette 18 mindestens zwei Reihen 46 von Versteifungselementen 42 vorgesehen sind. Die zwei gezeigten Reihen 46 von Versteifungselementen 42 sind in einem Winkel von 90° in Umfangsrichtung U versetzt zueinander angeordnet.

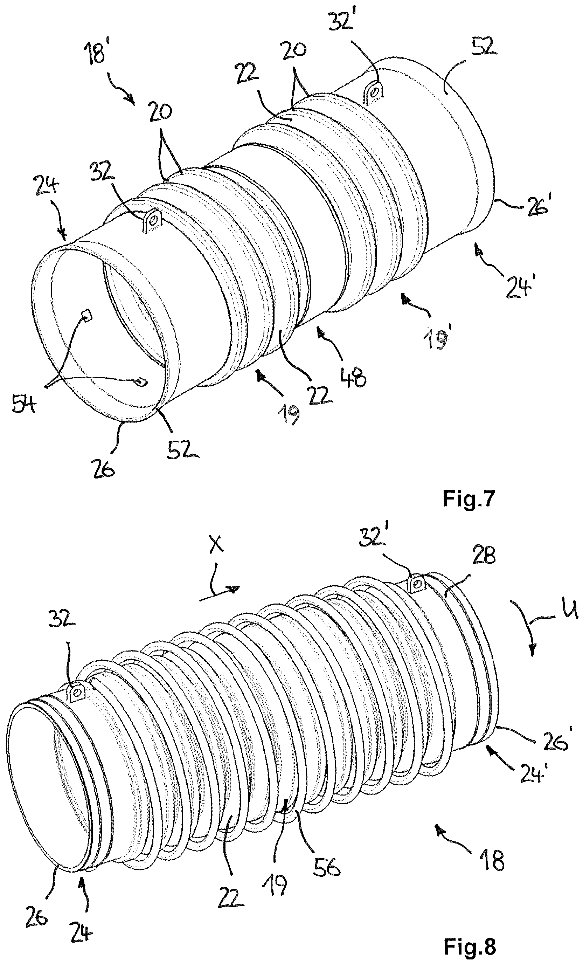

Fig. 7 zeigt eine weitere Ausführungsform einer Manschette 18`, welche aus einem 2-K-Werkstoff ausgebildet ist. Insbesondere die Endabschnitte 24, 24' und die damit ausgebildeten Rohranschlüsse 26, 26' sowie ein mittlerer Abschnitt 48 der Manschette 18' sind aus einem hartelastischen Kunststoff ausgebildet. Außenseitig an der Manschette 18`, insbesondere den hartelastisch ausgebildeten Endabschnitten 24, 24`, sind wiederum zwei axial zueinander im Abstand angeordnete, radial vorstehende Ösen 32, 32' vorgesehen.

Zwischen den Endabschnitten 24, 24' und dem mittleren Abschnitt 48 ist jeweils ein verformbarer Faltenbalgabschnitt 19, 19' aus dem flexiblen Material mit seiner in Falten 20 gelegten Wandung 22 angeordnet. In einer möglichen Ausgestaltung sind die Faltenbalgabschnitte 19, 19' bzw. die gesamte Manschette 18' aus einem elastischen Material ausgebildet, das einen Härtegrad unterhalb 80 Shore A hat, insbesondere in einem Bereich von 40 bis 80 Shore A.

Die Endabschnitte 24, 24' sind in der vorliegend gezeigten Ausführung als Steckmuffe 52 ausgeführt und weisen innenseitig vorstehende Rastelemente 54 auf. Die Rastelemente 54 sind dazu eingerichtet, mit der Außenseite eines in die Steckmuffe 52 einführbaren Endes des steifen Rohrabschnitts 12, 14 formschlüssig in Eingriff gebracht zu werden. Innenseitig ist an der Steckmuffe 52 mindestens ein nicht näher gezeigtes Dichtelement, insbesondere in Form eines umlaufenden Dichtsteges, für eine fluiddichte Verbindung der Rohranschlüsse 26, 26' mit den damit zu koppelnden Enden der Rohrabschnitte 12, 14 vorgesehen.

Fig. 8 zeigt eine Ausführung der in Fig. 2 gezeigten Manschette 18, der ein separates, sich außenseitig in Umfangsrichtung U um und in axialer Richtung X entlang des Faltenbalgabschnitts 19 erstreckendes Stützteil 56 zugeordnet ist, welches insbesondere die Biegesteifigkeit der Manschette 18 erhöht. Das Stützteil 56 ist vorliegend als spiralförmige Wendel ausgebildet, wobei das Stützteil 56 beispielsweise mit den außenseitig an der Manschette 18 radial vorstehenden Ösen 32, 32' zusammenwirken kann.

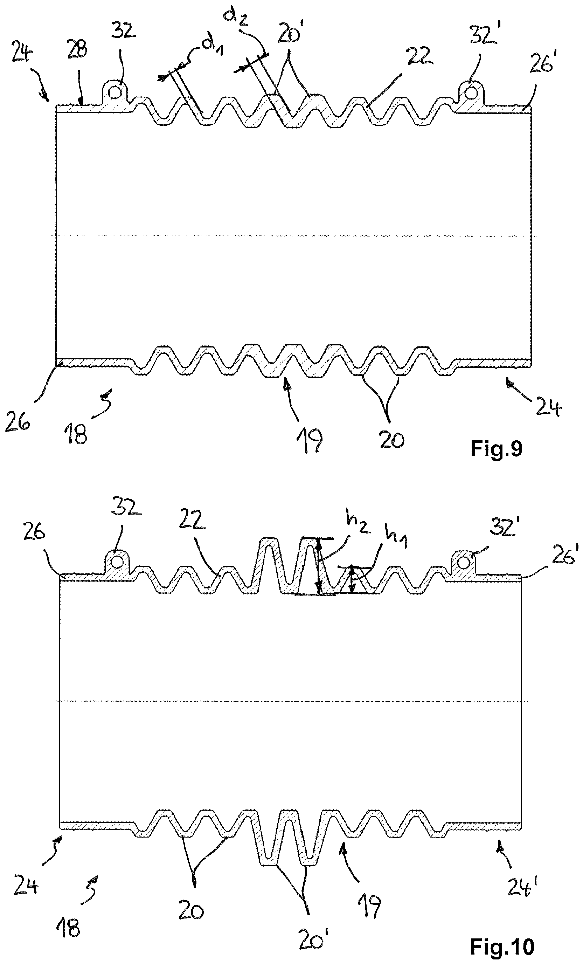

Fig. 9 und 10 zeigen weitere Ausführungsformen einer erfindungsgemäßen Manschette 18, welche einen Faltenbalgabschnitt 19 mit einer Wandung 22 mit einer Vielzahl von Falten 20, 20' aufweist, wobei die Falten 20' eine zu den übrigen Falten 20 unterschiedliche Wanddicke d und/oder-geometrie haben. In Fig. 9 weisen die Falten 20` an der Manschette 18 eine Wanddicke d₂ auf, die zur Wanddicke d₁ der Falten 20 ein Verhältnis haben, das im Bereich von etwa 1,5 bis 2,5, vorzugsweise bei etwa 2 liegt. In Fig. 10 weisen die Falten 20` an der Manschette 18 eine Faltenhöhe h₂ auf, die zur Faltenhöhe h₁ der Falten 20 ein Verhältnis im Bereich von 1,5 bis etwa 2,5, vorzugsweise etwa 2 haben.

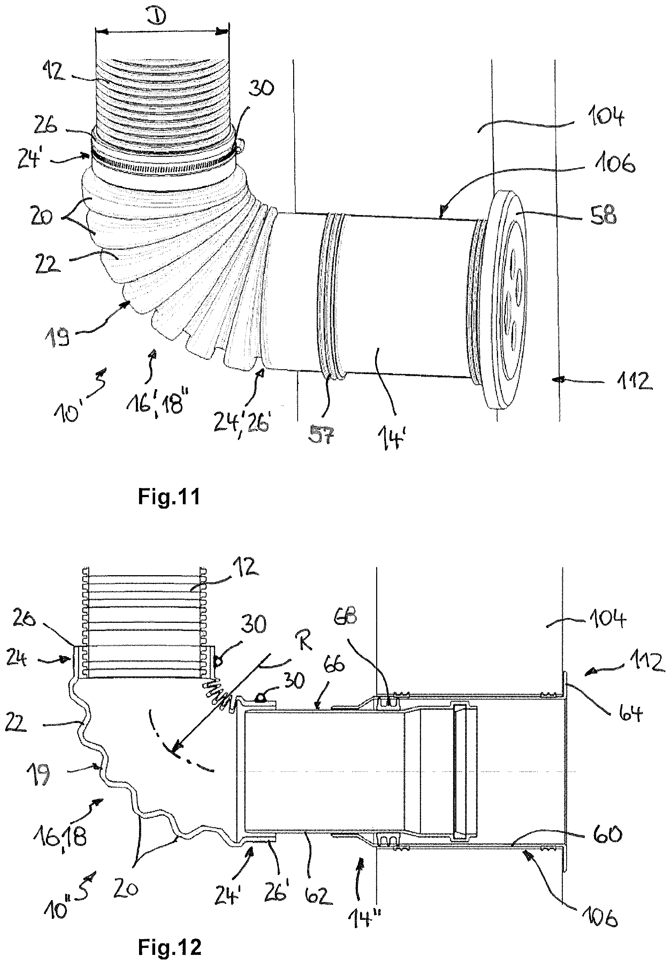

Fig. 11 zeigt eine weitere Ausführung einer Schutzrohranordnung 10', welche einen steifen, insbesondere senkrecht verlaufenden Rohrabschnitt 12 und einen steifen, insbesondere durch eine Öffnung 106 im Wandabschnitt 104 verlaufenden Rohrabschnitt 14' umfasst. Der Rohrabschnitt 14' ist einteilig mit der als Verbindungsabschnitt 16' zwischen den Rohrabschnitten 12, 14` dienenden Manschette 18" ausgebildet. Vorzugsweise sind die Manschette 18" und der Rohrabschnitt 14' in der gezeigten Ausführung aus demselben Material ausgebildet. Die steife Ausgestaltung des Rohrabschnitts 14' ist insbesondere durch eine große Wanddicke des Rohrabschnitt 14' erreicht. Der Rohrabschnitt 14' ist insbesondere dazu eingerichtet, mit einem von der Innenseite 112 des Wandabschnitts 104 aus einsetzbaren Dichtabschnitt 58 zusammenzuwirken. Der steife Rohrabschnitt 14`ist gegenüber der Öffnung 106 im Wandabschnitt 104 mittels mehrerer Dichtungsstege 57 abgedichtet.

Fig. 12 zeigt eine weitere Ausgestaltung einer erfindungsgemäßen Schutzrohranordnung 10" mit einem steifen Rohrabschnitt 12, einem steifen Rohrabschnitt 14" und einem die Enden der Rohrabschnitte 12, 14" miteinander verbindenden Verbindungsabschnitt 16 aus einer Manschette 18 mit einem Faltenbalgabschnitt 19. Der Rohrabschnitt 12 ist in der vorliegend gezeigten Ausführung als Wellrohr ausgebildet und der Rohrabschnitt 14" weist eine Wandhülse 60 und ein innerhalb und relativ zur Wandhülse 60 teleskopierbares Rohrteil 62 auf. Die Wandhülse 60 hat insbesondere einen mit der Innenseite 112 des Wandabschnitts 104 in Anlage bringbaren Anlageflansch 64. Die Wandhülse 60 weist zudem innenseitig ein mit der Außenseite 66 des teleskopierbaren Rohrteils 62 abdichtend in Anlage bringbares Dichtelement 68 auf. In der vorliegend gezeigten Ausführung ist das Rohrteil als KG-Rohr ausgeführt. Die Endabschnitte 24, 24' der Manschette 18 sind wiederum mittels geeigneter Spanneinrichtungen 30 mit den Enden der Rohrabschnitte 12 und 14" fluiddicht verbunden.

Fig. 13 zeigt ein Wärmeübertrager-System 100, beispielsweise eine Wärmepumpe oder eine Klimaanlage, zum Aufheizen oder Kühlen eines Gebäudes 102. Das Wärmeübertrager-System 100 ist an einem Wandabschnitt 104, insbesondere einem Gebäude-Außenwandabschnitt, installiert, durch den hindurch eine unterirdisch angeordnete Öffnung 106 ausgebildet ist.

Auf einer Außenseite 108 des senkrecht verlaufenden Wandabschnitts 104 ist ein Außengerät 110, vorliegend ein Monoblock-Gerät 110', des Wärmeübertrager-Systems 100 angeordnet. Auf der Innenseite 112 des Wandabschnitts 104 ist ein Innengerät 114 angeordnet, das in der vorliegenden Ausführung als Wärmespeicher 114' ausgebildet ist. Außengerät 110 und Innengerät 114 sind über mindestens eine, vorliegend zwei medienführende Leitungen 116 miteinander verbunden. Ferner sind das Außen- und Innengerät 110, 114 über eine Strom- bzw. Signalleitung 118 für die Stromversorgung bzw. Ansteuerung des Außengeräts 110 elektrisch verbunden. Die im nicht näher dargestellten Erdreich verlegten Leitungen 116, 118 sind innerhalb der in Fig. 1 gezeigten Schutzrohranordnung 10, insbesondere ausgehend von der Öffnung 106 im Wandabschnitt 104 bis zu einer Aufstellebene 120 für das Außengerät 110 aufgenommen.

In Fig. 14 ist ein erfindungsgemäßes Verfahren 100 zum Installieren einer Schutzrohranordnung 10, 10', 10" zum Durchführen zumindest einer erdverlegten, durch eine Öffnung 106 in einem Wandabschnitt 104 eines Gebäudes 102 hindurchführbaren, medienführenden Leitung 116 gezeigt. Das Verfahren 200 umfasst zumindest einen ersten Schritt 202, betreffend das Bereitstellen oder Erzeugen einer Schutzrohranordnung 10, 10', 10", welche mindestens zwei im Abstand zueinander angeordnete, steife Rohrabschnitte 12, 14, 14', 14" und mindestens eine die Rohrabschnitte 12, 14, 14', 14" miteinander verbindende, flexible Manschette 18, 18', 18" mit einer in Falten 20, 20' gelegten Wandung 22 und an beiden Endabschnitten (24, 24') der Manschette 18, 18', 18" angeordneten Rohranschlüssen 26, 26' aufweist, sowie das Vorinstallieren 204 der mindestens einen medienführenden Leitung 116, 118 innerhalb der Schutzrohrandordnung, wobei die steifen Rohrabschnitte 12, 14, 14', 14" der Schutzrohranordnung 10, 10', 10" beim Hindurchführen der Leitung 116, 118 durch die Schutzrohranordnung 10, 10', 10" eine im Wesentlichen gerade Ausrichtung zueinander aufweisen, und mindestens einen weiteren Schritt, betreffend das Montieren 206 der Schutzrohranordnung 10, 10', 10" mit der darin angeordneten medienführenden Leitung 116 in einem Wandabschnitt 104, und Ausrichten der steifen Rohrabschnitte 12, 14, 14', 14" in einem Winkel derart zueinander, dass im Bereich der Manschette 18, 18', 18" zwischen den steifen Rohrabschnitten 12, 14, 14', 14" ein Biegeradius von ≤ 30 cm erzeugt wird.

Ähnliche oder gleiche Bauteile sind mit denselben Bezugszeichen versehen.

### Bezugszeichenliste:

- 10, 10', 10": Schutzrohranordnung
- 12: Rohrabschnitt
- 14, 14', 14": Rohrabschnitt
- 16, 16': Verbindungsabschnitt
- 18, 18', 18": Manschette
- 19: Faltenbalgabschnitt
- 20, 20': Falte
- 22: Wandung
- 24, 24`: Endabschnitt
- 26, 26`: Rohranschluss
- 27: Dichtelement
- 28: Nut
- 30: Spanneinrichtung
- 32, 32', 32": Öse
- 34: Verbindungselement
- 36: Dichtungseinsatz
- 38: Stangenkörper
- 40: Kopplungsabschnitt
- 40': Dorn
- 42: Versteifungselement
- 44, 44`: Materialsteg
- 46: Reihe
- 48: mittlerer Abschnitt
- 52: Steckmuffe
- 54: Rastelement
- 56: Stützteil
- 57: Dichtungssteg
- 58: Dichtabschnitt
- 60: Wandhülse
- 62: Rohrteil
- 64: Anlageflansch
- 66: Außenseite
- 68: Dichtelement
- 100: Wärmeübertrager-System
- 102: Gebäude
- 104: Wandabschnitt
- 106: Öffnung
- 108: Außenseite
- 110: Außengerät
- 110': Monoblock-Gerät
- 112: Innenseite
- 114: Innengerät
- 114': Wärmespeicher
- 116: medienführende Leitung
- 118: Stromleitung
- 120: Aufstellebene
- 200: Verfahren
- 202: Bereitstellen oder Erzeugen
- 204: Vorinstallieren
- 206: Montieren
- d, d₁, d₂: Wanddicke
- h, h₁, h₂: Faltenhöhe
- A: Abstand
- R: Biegeradius
- U: Umfangsrichtung
- X: axiale Richtung

## Patentansprüche

1. Schutzrohranordnung (10, 10', 10") zum Durchführen von zumindest einer erdverlegten, medienführenden Leitung (116) durch eine Öffnung (106) in einem Wandabschnitt (104) eines Gebäudes (102), mit
- zumindest zwei steifen in einem Winkel zueinander anordenbaren Rohrabschnitten (12, 14, 14', 14"), und
- mindestens einem die Rohrabschnitte (12, 14, 14', 14") miteinander verbindenden Verbindungabschnitt (16),
**dadurch gekennzeichnet, dass** der Verbindungsabschnitt (16) als flexible Manschette (18, 18', 18") mit mindestens einem Faltenbalgabschnitt (19, 19') und an beiden Endabschnitten (24, 24') der Manschette (18, 18', 18") angeordneten Rohranschlüssen (26, 26') ausgebildet und dazu eingerichtet ist, im Verbindungsabschnitt (16) zwischen den steifen Rohrabschnitten (12, 14, 14', 14") einen Biegeradius (R) von < 50 cm, besonders bevorzugt ≤ 30 cm auszubilden.

2. Schutzrohranordnung (10, 10', 10") nach Anspruch 1,
**dadurch gekennzeichnet, dass** die Manschette (18, 18', 18") zumindest zwei in axialer Richtung (X) im Abstand zueinander angeordnete, nach außen vorstehende Ösen (32, 32', 32") oder Haken aufweist, wobei ein den Ösen (32, 32', 32") oder Haken zugeordnetes Verbindungselement (34) zum Arretieren des Biegeradius (R) im Verbindungsabschnitt (16) vorgesehen ist.

3. Schutzrohranordnung (10, 10', 10") nach Anspruch 1 oder 2,
**dadurch gekennzeichnet, dass** die Manschette (18, 18', 18") an dem Faltenbalgabschnitt (19) und/oder den Endabschnitten (24, 24') außenseitig mehrere in axialer Richtung (X) und in Umfangsrichtung (U) verteilt angeordnete Ösen (32, 32', 32") aufweist.

4. Schutzrohranordnung (10, 10', 10") nach Anspruch 2 oder 3,
**dadurch gekennzeichnet, dass** das Verbindungselement (34) einen Stangenkörper (38) aufweist, an dem jeweils endseitig ein Kopplungsabschnitt (40) für eine Formschlussverbindung mit einer der Ösen (32, 32', 32") oder Haken angeordnet ist.

5. Schutzrohranordnung (10, 10', 10") nach einem der vorstehenden Ansprüche, **dadurch gekennzeichnet, dass** der Faltenbalgabschnitt (19, 19') auf seiner Wandung (22) außenseitig, vorzugsweise zwischen zwei benachbart angeordneten Falten (20, 20'), mehrere in axialer Richtung (X) und/oder in Umfangsrichtung (U) angeordnete Versteifungselemente (42) aufweist.

6. Schutzrohranordnung (10, 10', 10") nach Anspruch 5,
**dadurch gekennzeichnet, dass** mehrere in axialer Richtung (X) hintereinander angeordnete Versteifungselemente (42) eine Reihe (46) von Versteifungselementen (42) definieren, wobei vorzugsweise mindestens zwei Reihen (46) von Versteifungselementen (42) außenseitig an der Wandung (22) des Faltenbalgabschnitts (19, 19') angeordnet sind.

7. Schutzrohranordnung (10, 10', 10") nach einem der vorstehenden Ansprüche, dass die Manschette (18, 18', 18") aus einem 2-K-Material ausgebildet ist, wobei vorzugsweise die Endabschnitte (24, 24') und/oder ein mittlerer Abschnitt (48) der Manschette (18, 18', 18") aus einen hartelastischen Material, vorzugsweise einem hartelastischem Kunststoff ausgebildet sind/ist, wobei die Endabschnitte (24, 24') vorzugsweise jeweils ein innenliegendes Dichtelement aufweisen.

8. Schutzrohranordnung (10, 10', 10") nach einem der vorstehenden Ansprüche, dass die Endabschnitte (24, 24') als Steckmuffe (52) ausgeführt sind, an denen vorzugsweise innenseitig Rastelemente (54) vorstehen, welche dazu eingerichtet sind, mit der Außenseite des in die Steckmuffe (52) einführbaren steifen Rohrabschnitts (12, 14, 14") formschlüssig in Eingriff gebracht zu werden.

9. Schutzrohranordnung (10, 10', 10") nach einem der vorstehenden Ansprüche, dass mit der Manschette (18, 18', 18") ein separates, sich zumindest außenseitig um den Faltenbalgabschnitt (19, 19') erstreckendes Stützteil (56) zur Erhöhung der Biegesteifigkeit des Verbindungsbereichs (16) zusammenwirkt, wobei vorzugsweise das Stützteil (56) als spiralförmige Wendel ausgebildet ist.

10. Schutzrohranordnung (10, 10', 10") nach einem der vorstehenden Ansprüche, **dadurch gekennzeichnet, dass** zumindest die flexiblen Faltenbalgabschnitte (19, 19') der Manschette (18, 18', 18") aus einem elastischen Material ausgebildet ist, das einen Härtegrad gemessen nach DIN ISO 7619-1 aufweist, der unterhalb 80 Shore A liegt.

11. Schutzrohranordnung (10, 10', 10") nach einem der vorstehenden Ansprüche, dass die Manschette (18, 18', 18") mindestens eine Falte (20') mit einer zu den übrigen Falten (20) unterschiedlichen Wanddicke (d) und/oder Geometrie aufweist.

12. Schutzrohranordnung (10, 10', 10") nach einem der vorstehenden Ansprüche, dass die Manschette (18, 18', 18") mittels eines ihrer Rohranschlüsse einteilig mit einem der steifen Rohrabschnitte (14') ausgebildet ist.

13. Schutzrohranordnung (10, 10', 10") nach einem der vorstehenden Ansprüche, dass ein steifer Rohrabschnitt (14") wenigstens eine Wandhülse (60) mit einem innenseitig angeformten Dichtelement (66) zur abdichtenden Aufnahme eines zur Wandhülse (60) teleskopierbaren Rohrteils (62) aufweist.

14. Wärmeübertrager-System (100), mit
- einem auf einer Innenseite (112) eines Wandabschnitts (104) eines Gebäudes (102) anordenbaren Innengerät (114),
- einem auf der Außenseite (108) des Wandabschnitts (104) anordenbaren und durch eine Öffnung (106) im Wandabschnitt (104) mittels mindestens einer medienführenden Leitung (116, 118) mit dem Innengerät (114) verbindbaren Außengerät (110),
- mindestens einer medienführenden Leitung (116, 118), und
- einer in der Öffnung (106) des Wandabschnitts (104) montierbaren, erdverlegten Schutzrohranordnung (10, 10', 10") nach einem der Ansprüche 1 bis 13

15. Verfahren (200) zum Installieren einer Schutzrohranordnung (10, 10', 10") zum Durchführen zumindest einer erdverlegten, durch eine Öffnung (106) in einem Wandabschnitt (104) eines Gebäudes (102) hindurchführbaren, medienführenden Leitung (116), umfassend die Schritte:
- Bereitstellen oder Erzeugen (202) einer Schutzrohranordnung (10, 10', 10"), wobei die Schutzrohranordnung (10, 10', 10") mindestens zwei im Abstand zueinander angeordnete, steife Rohrabschnitte (12, 14, 14', 14") und mindestens eine die Rohrabschnitte (12, 14, 14', 14") miteinander verbindende, flexible Manschette (18, 18', 18") mit mindestens einem Faltenbalgabschnitt (19, 19') und an beiden Endabschnitten (24, 24') der Manschette (18, 18', 18") angeordneten Rohranschlüssen (26, 26') aufweist;
- Vorinstallieren (204) der mindestens einen medienführenden Leitung (116, 118) innerhalb der Schutzrohrandordnung, wobei die steifen Rohrabschnitte (12, 14, 14', 14") der Schutzrohranordnung (10, 10', 10") beim Hindurchführen der Leitung (116, 118) durch die Schutzrohranordnung (10, 10', 10") eine im Wesentlichen gerade Ausrichtung zueinander aufweisen, und
- Montieren (206) der Schutzrohranordnung (10, 10', 10") mit der darin angeordneten medienführenden Leitung (116) in einem Wandabschnitt (104), und Ausrichten der steifen Rohrabschnitte (12, 14, 14', 14") in einem Winkel derart zueinander, dass im Bereich der Manschette (18, 18', 18") zwischen den steifen Rohrabschnitten (12, 14, 14', 14") ein Biegeradius von < 50 cm, besonders bevorzugt ≤ 30 cm erzeugt wird.

16. Verfahren (200) nach Anspruch 15, umfassend wenigstens einen, mehrere oder sämtliche der nachfolgend angeführten Verfahrensschritte:
- Ausrichten der steifen Rohrabschnitte (12, 14, 14', 14") in einen Winkel im Bereich von etwa 80° bis etwa 180° zueinander;
- Abdichten eines steifen Rohrabschnitts (14, 14', 14") gegenüber der Öffnung (106) im Wandabschnitt (104);
- Arretieren der Position des Biegeradius (R) an der Manschette (18, 18', 18") mittels eines mit der Manschette (18, 18', 18") in Wirkverbindung bringbaren Verbindungselements (34),
und
- Aussteifen der Manschette (18, 18', 18") mittels eines separaten, um die Außenseite einer Wandung (22) der Manschette (18, 18', 18") anordenbaren Stützteils (56).

17. Verwendung einer flexiblen Manschette (18, 18', 18") mit mindestens einem Faltenbalgabschnitt (19, 19'), der eine Wandung (22) mit einer Vielzahl an Falten (20, 20') aufweist, und an beiden Endabschnitten (24, 24') der Manschette (18, 18', 18") angeordneter Rohranschlüsse (26, 26') als Verbindungsabschnitt (16) zwischen zwei steifen, in einem Winkel zueinander verlaufender Rohrabschnitte (12, 14, 14', 14") einer Schutzrohranordnung (10, 10', 10") zum Durchführen von zumindest einer erdverlegten, medienführenden Leitung (116) durch eine Öffnung (106) in einem Wandabschnitt (104) eines Gebäudes (102), wobei im Verbindungsabschnitt (16) zwischen den steifen Rohrabschnitten (12, 14, 14', 14") ein Biegeradius (R) von < 50 cm, besonders bevorzugt ≤ 30 cm ausgebildet ist.
